# EUROPEAN PATENT SPECIFICATION

(11) **EP 3 109 438 B1**
(45) Date of publication and mention of the grant of the patent: **18.09.2019**
(21) Application number: 16175760.4
(22) Date of filing: 22.06.2016
(51) Int. Cl.: F02C 6/08, F02C 7/141, F02C 7/18, F02C 9/18, F02K 3/115

(54) **INTERCOOLED COOLING AIR WITH PLURAL HEAT EXCHANGERS**
ZWISCHENGEKÜHLTE KÜHLLUFT MIT MEHREREN WÄRMETAUSCHERN
AIR DE REFROIDISSEMENT REFROIDI AVEC UNE PLURALITÉ D'ÉCHANGEURS DE CHALEUR

(30) Priority: 22.06.2015 US 201514745567
(43) Date of publication of application: 28.12.2016
(73) Proprietor: United Technologies Corporation, Farmington, CT 06032 (US)
(72) Inventor: SUCIU, Gabriel L., Glastonbury, CT Connecticut 06033 (US); CHANDLER, Jesse M., South Windsor, CT Connecticut 06074 (US); STAUBACH, Joseph Brent, Colchester, CT Connecticut 06415 (US); MERRY, Brian D., Andover, CT Connecticut 06232 (US)
(74) Representative: Dehns

(56) References cited:
- EP-A1- 3 085 924
- GB-A- 2 152 148
- US-A- 5 452 573
- US-A- 5 918 458
- US-A- 6 050 079
- US-A1- 2009 196 736

## Description

### BACKGROUND

This application relates to improvements in providing cooling air from a compressor section to a turbine section in a gas turbine engine.

Gas turbine engines are known and typically include a fan delivering air into a bypass duct as propulsion air. Further, the fan delivers air into a compressor section where it is compressed. The compressed air passes into a combustion section where it is mixed with fuel and ignited. Products of this combustion pass downstream over turbine rotors driving them to rotate.

It is known to provide cooling air from the compressor to the turbine section to lower the operating temperatures in the turbine section and improve overall engine operation. Typically, air from the downstream most end of the compressor has been tapped, passed through a heat exchanger, which may sit in the bypass duct and then delivered into the turbine section. The air from the downstream most end of the compressor section is at elevated temperatures.

A gas turbine engine having the features of the preamble of claim 1 is disclosed in US 5452573 A.

### SUMMARY

According to the invention there is provided a gas turbine engine as set forth in claim 1.

In an embodiment according to the previous embodiment, a main fan delivers bypass air into a bypass duct and into the main compressor section. The first and second heat exchangers are positioned within the bypass duct to be cooled by bypass air.

In another embodiment according to any of the previous embodiments, air temperatures at the downstream most location of the high pressure compressor are greater than or equal to 1350°F (732°C).

In another embodiment according to any of the previous embodiments, the second tap is at the downstream most end.

In another embodiment according to any of the previous embodiments, the location of the third tap is upstream of a location where the first and second taps mix together.

In another embodiment according to any of the previous embodiments, the component to be cooled is a bearing compartment.

In another embodiment according to any of the previous embodiments, the bearing compartment supports a shaft adjacent to a combustor within the gas turbine engine.

These and other features may best be understood from the following specification and drawings, the following of which is a brief description.

### BRIEF DESCRIPTION OF THE DRAWINGS

Figure 1 schematically shows an embodiment of a gas turbine engine.
Figure 2 shows a prior art engine.
Figure 3 shows an engine falling outside the scope of the claims.
Figure 4 shows a system falling outside the scope of the claims.
Figure 5 shows a second system falling outside the scope of the claims.
Figure 6 shows an embodiment of a system in accordance with the invention.

### DETAILED DESCRIPTION

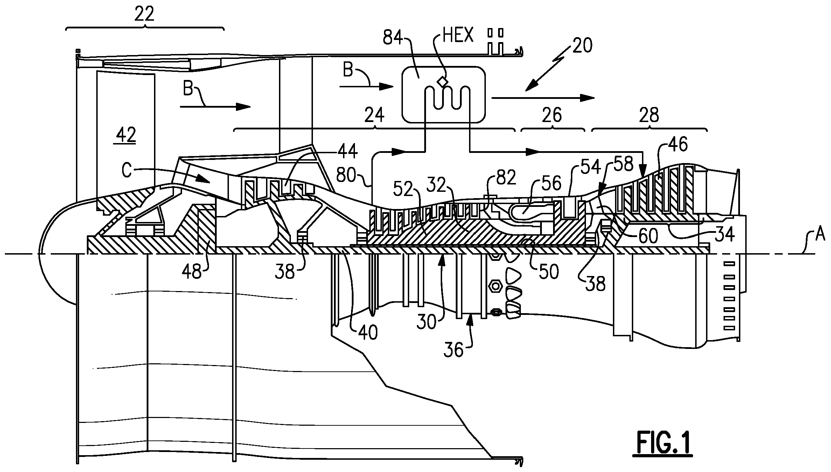

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/(518.7°R)]^{0.5}. The "Low corrected fan tip speed", as disclosed herein according to one non-limiting embodiment, is less than about 1150 ft/second (350.5 m/s).

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Gas turbine engines designs are seeking to increase overall efficiency by generating higher overall pressure ratios. By achieving higher overall pressure ratios, increased levels of performance and efficiency may be achieved. However, challenges are raised in that the parts and components associated with a high pressure turbine require additional cooling air as the overall pressure ratio increases.

The example engine 20 utilizes air bleed 80 from an upstream portion of the compressor section 24 for use in cooling portions of the turbine section 28. The air bleed is from a location upstream of the downstream end 82 of the compressor section 24. The bleed air passes through a heat exchanger 84 to further cool the cooling air provided to the turbine section 28. The air passing through heat exchanger 84 is cooled by the bypass air B. That is, heat exchanger 84 is positioned in the path of bypass air B. As disclosed below, an auxiliary compressor may drive the flow.

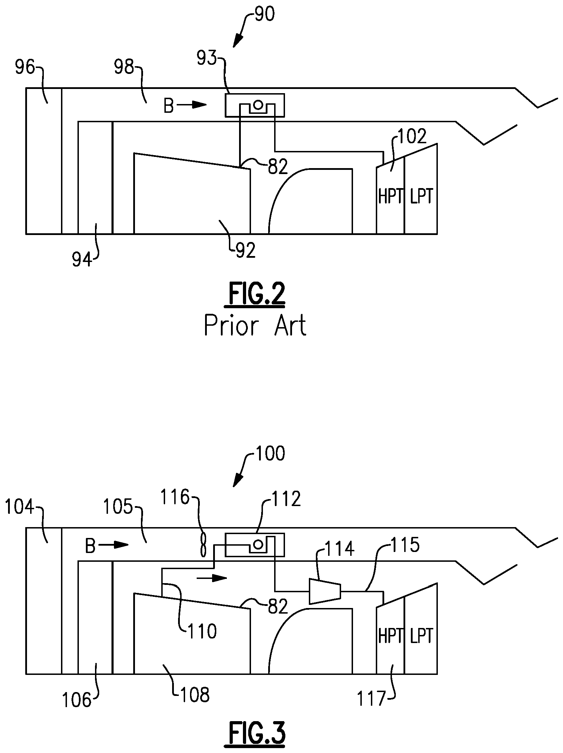

A prior art approach to providing cooling air is illustrated in Figure 2. An engine 90 incorporates a high pressure compressor 92 downstream of the low pressure compressor 94. As known, a fan 96 delivers air into a bypass duct 98 and into the low pressure compressor 94. A downstream most point 82 in the high pressure compressor 92 provides bleed air into a heat exchanger 93. The heat exchanger is in the path of the bypass air in bypass duct 98, and is cooled. This high pressure high temperature air from location 82 is delivered into a high pressure turbine 102.

The downstream most point 82 of the high pressure compressor 92 is known as station 3. The temperature T3 and pressure P3 are both very high.

In future engines, T3 levels are expected to approach greater than or equal to 1350°F (732°C). Current heat exchanger technology is becoming a limiting factor as heat exchangers are made of materials, manufacturing, and design capability which have difficulty receiving such high temperature levels.

Figure 3 shows an engine 100 falling outside the scope of this disclosure. A fan 104 may deliver air B into a bypass duct 105 and into a low pressure compressor 106. High pressure compressor 108 is positioned downstream of the low pressure compressor 106. A bleed 110 taps air from a location upstream of the downstream most end 82 of the high pressure compressor 108. This air is at temperatures and pressures which are much lower than T3/P3. The air tapped at 110 passes through a heat exchanger 112 which sits in the bypass duct 105 receiving air B. Further, the air from the heat exchanger 112 passes through a compressor 114, and then into a conduit 115 leading to a high turbine 117. This structure is all shown schematically.

Since the air tapped at point 110 is at much lower pressures and temperatures than the Figure 2 prior art, currently available heat exchanger materials and technology may be utilized. This air is then compressed by compressor 114 to a higher pressure level such that it will be able to flow into the high pressure turbine 117.

An auxiliary fan 116 is illustrated upstream of the heat exchanger 112. The main fan 104 may not provide sufficient pressure to drive sufficient air across the heat exchanger 112. The auxiliary fan will ensure there is adequate air flow in the circumferential location of the heat exchanger 112.

In one embodiment, the auxiliary fan may be variable speed, with the speed of the fan varied to control the temperature of the air downstream of the heat exchanger 112. As an example, the speed of the auxiliary fan may be varied based upon the operating power of the overall engine.

Details of the basic system are disclosed in U.S. patent application serial no. 14/695,578, entitled "Intercooled Cooling Air," and filed on April 24, 2015.

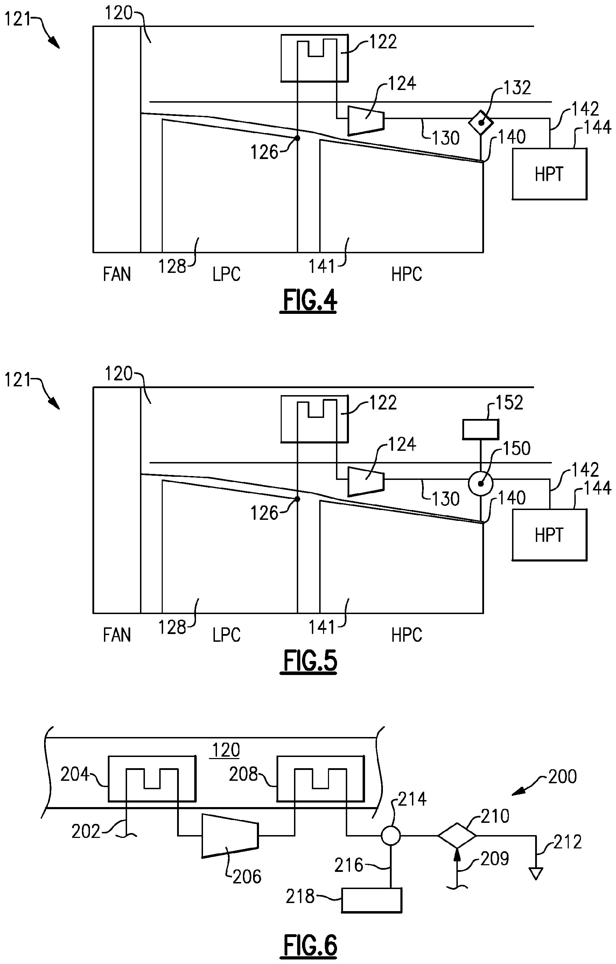

Figure 4 shows an engine 121 falling outside the scope of the claims that provides a variation to the basic system disclosed above. A bypass duct 120 again receives a heat exchanger 122, which communicates with the compressor 124. Air is tapped from the low pressure compressor 128 at a location 126 and passes through the heat exchanger 122. A line 130 downstream of the compressor 124 communicates with a mixer 132. Air is tapped at 140 from the most downstream location in a high pressure compressor 141. While the most downstream location is disclosed, it is possible to use an alternative location that is closer to the most downstream end than the location 126. The air is mixed with the cooler air from line 130 in the mixer 132 and then passes into a line 142 to be delivered to the high pressure turbine 144.

With this arrangement, the amount of cooled air tapped from the low pressure compressor 128 is reduced, and therefore the size of the compressor 124 can be reduced.

Figure 5 shows yet another arrangement falling outside the scope of the claims wherein the mixer 132 is replaced by a valve 150 which is operable to vary the volume of air from tap 140 and the line 130 being delivered into the line 142. Thus, at certain periods of operation, a control 152 for the valve 150 may mix more or less of the hot air from tap 140 relative to the cooler air. As an example, at lower power operation, such as cruise, more of the hot air may be mixed with the cool air. On the other hand, at high power operation, such as take-off, the percentage of cooler air from line 130 will be greater relative to the hot air from tap 140.

Details of the systems of Figures 4 and 5 are disclosed in U.S. patent application serial no. 14/695534, filed April 24, 2015, and entitled "Intercooled Cooling Air Tapped From Plural Locations."

Figure 6 shows a system 200 in accordance with the invention that has two features. As shown, air 202 is tapped, from the location 126. Air 202 passes through a first heat exchanger 204, which sits in a cooling duct such as bypass duct 120. That air passes to the auxiliary compressor 206. In this system, a plural, or "topping," heat exchanger 208 is downstream of the compressor 206. That air passes downstream and is mixed with hot air 209 from location 140 at a mixer 210. This system can also be incorporated into a system having the features of Figure 5. Downstream of the mixer 210 the air is delivered to the high pressure turbine at line 212.

The topping heat exchanger 208 also sits in the bypass duct 120, and the amount of cooling provided to the air will be increased. Thus, the amount of air moving through the auxiliary compressor 206, and all the plumbing connections can be made much smaller. Since the air downstream of heat exchanger 208 is cooler, a higher percentage of air from line 209 can be mixed compared to the air from tap 202.

Another feature is shown at 214 in Figure 6. 214 is a tap for tapping air 216 for cooling purposes. Air downstream of the second or topping heat exchanger 208 is cooled to lower levels than in the Figures 4 and 5 embodiments, and thus the air is useful as cooling air such as for a bearing compartment 218. Bearing compartment 218 may be the #4 bearing compartment, such as associated with supporting a shaft adjacent the combustor.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A gas turbine engine comprising;
a main compressor section having a high pressure compressor (141) with a downstream most end, and more upstream locations;
a turbine section having a high pressure turbine (144);
a first tap (126) tapping air from at least one of said more upstream locations in said main compressor section, passing said tapped air through a first heat exchanger (204) and then to a cooling compressor (206), said cooling compressor (206) compressing air downstream of said first heat exchanger (204);
a second heat exchanger (208) downstream of said cooling compressor (206); a second tap (140) tapping air from a location closer to said downstream most end than the location of said first tap (126); and
a third tap (216) downstream of said second heat exchanger (208), air being tapped from said third tap (216) and delivered to a component (218) on the gas turbine engine to be cooled; **characterized in that**:
a mixer (210) mixes air from said first and second taps (126, 140) at a location downstream of said second heat exchanger (208) and **in that** the mixed air is delivered into said high pressure turbine (144).

2. The gas turbine engine as set forth in claim 1, wherein a main fan delivers bypass air into a bypass duct and into said main compressor section and said first and second heat exchangers (204, 208) positioned within said bypass duct to be cooled by bypass air.

3. The gas turbine engine as set forth in claim 1 or 2, wherein the location of said third tap (219) is upstream of a location where said first and second taps mix together.

4. The gas turbine engine as set forth in any preceding claim, wherein said component (218) to be cooled is a bearing compartment.

5. The gas turbine engine as set forth in claim 4, wherein said bearing compartment (218) supports a shaft adjacent to a combustor within said gas turbine engine.

6. The gas turbine engine as set forth in any preceding claim, wherein air temperatures at said downstream most location of said high pressure compressor (144) are greater than or equal to 1350°F (732°C).

7. The gas turbine engine as set forth in any preceding claim, wherein the second tap (140) is at said downstream most end.

## Patentansprüche

1. Gasturbinenmotor, umfassend:
einen Hauptverdichterabschnitt, der einen Hochdruckverdichter (141) mit einem stromabwärtigsten Ende und mehreren stromaufwärtigen Stellen aufweist;
einen Turbinenabschnitt, der eine Hochdruckturbine (144) aufweist;
eine erste Zapfstelle (126), die Luft von zumindest einer der mehreren stromaufwärtigen Stellen in dem Hauptverdichterabschnitt zapft, die gezapfte Luft durch einen ersten Wärmetauscher (204) und dann zu einem Kühlverdichter (206) gibt, wobei der Kühlverdichter (206) Luft stromabwärts des ersten Wärmetauschers (204) komprimiert;
einen zweiten Wärmetauscher (208) stromabwärts des ersten Kühlverdichters (206);
eine zweite Zapfstelle (140), die Luft von einer Stelle zapft, die näher an dem stromabwärtigsten Ende als die Stelle der ersten Zapfstelle (126) ist; und
eine dritte Zapfstelle (216) stromabwärts des zweiten Wärmetauschers (208), wobei Luft aus der dritten Zapfstelle (216) gezapft und zu einer zu kühlenden Komponente (218) an dem Gasturbinenmotor geliefert wird; **dadurch gekennzeichnet, dass**:
ein Mischer (210) Luft aus der ersten und zweiten Zapfstelle (126, 140) an einer Stelle stromabwärts des zweiten Wärmetauschers (208) mischt, und dass die gemischte Luft in die Hochdruckturbine (144) geliefert wird.

2. Gasturbinenmotor nach Anspruch 1, wobei ein Hauptgebläse Umgehungsluft in einen Umgehungskanal und in den Hauptverdichterabschnitt liefert und der erste und zweite Wärmetauscher (204, 208) innerhalb des Umgehungskanals positioniert sind, um durch Umgehungsluft gekühlt zu werden.

3. Gasturbinenmotor nach Anspruch 1 oder 2, wobei sich die Stelle der dritten Zapfstelle (219) stromaufwärts einer Stelle befindet, an der sich die erste und zweite Zapfstelle miteinander vermischen.

4. Gasturbinenmotor nach einem vorhergehenden Anspruch, wobei die zu kühlende Komponente (218) eine Lagerkammer ist.

5. Gasturbinenmotor nach Anspruch 4, wobei die Lagerkammer (218) eine Welle benachbart zu einer Brennkammer innerhalb des Gasturbinenmotors stützt.

6. Gasturbinenmotor nach einem vorhergehenden Anspruch, wobei Lufttemperaturen an der stromabwärtigsten Stelle des Hochdruckverdichters (144) höher als oder gleich 1350 °F (732 °C) sind.

7. Gasturbinenmotor nach einem vorhergehenden Anspruch, wobei sich die zweite Zapfstelle (140) an dem stromabwärtigsten Ende befindet.

## Revendications

1. Moteur à turbine à gaz comprenant :
une section de compresseur principale ayant un compresseur haute pression (141) avec une extrémité la plus en aval, et des emplacements plus en amont ;
une section de turbine ayant une turbine haute pression (144) ;
une première prise (126) prélevant de l'air à partir d'au moins l'un desdits emplacements plus en amont dans ladite section de compresseur principale, faisant passer ledit air prélevé à travers un premier échangeur de chaleur (204) puis vers un compresseur de refroidissement (206), ledit compresseur de refroidissement (206) comprimant de l'air en aval dudit premier échangeur de chaleur (204) ;
un second échangeur de chaleur (208) en aval dudit compresseur de refroidissement (206) ;
une deuxième prise (140) prélevant de l'air à partir d'un emplacement plus proche de ladite extrémité la plus en aval que l'emplacement de ladite première prise (126) ; et
une troisième prise (216) en aval dudit second échangeur de chaleur (208), l'air étant prélevé à partir de ladite troisième prise (216) et délivré à un composant (218) sur le moteur à turbine à gaz à refroidir ; **caractérisé en ce que** :
un mélangeur (210) mélange l'air provenant desdites première et deuxième prises (126, 140) au niveau d'un emplacement en aval dudit second échangeur de chaleur (208) et **en ce que** l'air mélangé est délivré dans ladite turbine haute pression (144).

2. Moteur à turbine à gaz selon la revendication 1, dans lequel un ventilateur principal délivre de l'air de dérivation dans un conduit de dérivation et dans ladite section de compresseur principale et lesdits premier et second échangeurs de chaleur (204, 208) étant positionnés à l'intérieur dudit conduit de dérivation à refroidir par l'air de dérivation.

3. Moteur à turbine à gaz selon la revendication 1 ou 2, dans lequel l'emplacement de ladite troisième prise (219) est situé en amont d'un emplacement où lesdites première et deuxième prises se mélangent.

4. Moteur à turbine à gaz selon une quelconque revendication précédente, dans lequel ledit composant (218) à refroidir est un compartiment de palier.

5. Moteur à turbine à gaz selon la revendication 4, dans lequel ledit compartiment de palier (218) supporte un arbre adjacent à une chambre de combustion à l'intérieur dudit moteur à turbine à gaz.

6. Moteur à turbine à gaz selon une quelconque revendication précédente, dans lequel les températures de l'air au niveau dudit emplacement le plus en aval dudit compresseur haute pression (144) sont supérieures ou égales à 1350 °F (732 °C).

7. Moteur à turbine à gaz selon une quelconque revendication précédente, dans lequel la deuxième prise (140) est située au niveau de l'extrémité la plus en aval.
